# EUROPEAN PATENT APPLICATION

(11) **EP 2 100 519 A1**
(43) Date of publication of application: **16.09.2009**
(21) Application number: 08003951.4
(22) Date of filing: 04.03.2008
(51) Int. Cl.: A23L 1/236, C13F 3/00, C13F 3/02

(54) **Particle containing a high-intensity sweetener, process for preparation and use**

(71) Applicant: Tiense Suikerraffinaderij N.V., 1150 Brussel (BE)
(72) Inventor: Wouters, Rudy, 2260 Westerlo (BE)
(74) Representative: Koster, Nico

(57) **Abstract**

The invention relates to a nib sugar particle, containing a nutritive sweetener and a high-intensity sweetener. The invention further relates to a process for the preparation of a nib sugar particle, comprising the steps of
a) providing nib sugar particles consisting essentially of a nutritive sweetener;
b) preparing a liquid coating composition having water as continuous phase and containing at least one high-intensity sweetener;
c) applying the coating composition to the nib sugar particles;
d) drying the nib sugar particles to a desired rest amount of water.

## Description

The invention relates to a particle containing a high-intensity sweetener.

Such particles are known, most notably in a small tablet-like form. These tablets are then used a.o. to sweeten beverages like tea or coffee.

A disadvantage of the know particles is that their small size and form gives these particles a rather clinical image, and makes them difficult to handle.

It is the objective of the present invention to reduce or even eliminate the said disadvantage.

The objective is achieved in that the particle is a nib sugar particle.

It is an advantage of the invention that the particles are easier to handle due to their larger size; moreover, the irregular shape of nib sugar gives them a more natural, organic appearance.

The present invention thus relates to a nib sugar particles, containing at least one nutritive sweetener and at least one high-intensity sweetener.

Traditional nib sugar particles, also referred to as pearl sugar particles, are as such well-known; they typically are irregularly shaped particles, having lengths of about 2 - 15 mm and consisting essentially of fused sucrose crystals. Such nib sugar particles are often used for decorative purposes.

As meant herein, the term 'sugar', when used to describe the particles of the invention, does not have the meaning 'sucrose' but rather the more generic meaning of a nutritive sweetener.

The terms 'consist(ing) essentially of' or 'essentially only' and equivalents have in relation to a composition the usual meaning that in addition to compounds that are mandatory, other compounds may also be present, provided that the essential characteristics of the composition are not materially affected by their presence.

The nib sugar particles according to the invention contain at least one nutritive sweetener. Known examples of nutritive sweeteners, in literature also referred to as bulk sweeteners, are sucrose, mixtures of 6-0-alpha-D-glucopyranosido-D-sorbitol (1,6-GPS) and 1-0-alpha-D-glucopyranosido-D-mannitol-dihydrate (1,1-GPM-dihydrate) such as Isomalt^{®}, isomaltulose (Palatinose^{®}), trehalulose, sorbitol, xylitol, erythritol, maltitol, and mixtures thereof. In one preferred embodiment the at least one nutritive sweetener is sucrose.

The nib sugar particle of the invention contains at least one high-intensity sweetener. The term high-intensity sweetener means within the context of the present invention a compound that has, compared to sucrose, per unit of weight at least 2 times and at most 20,000 times the sweetness of sucrose. Many high-intensity sweeteners as such are known, both from natural origin as well as resulting from synthetic preparation. In principle, any high-intensity sweetener that can be incorporated into a particle is suitable for the nib sugar particle of the invention.

Examples of high-intensity sweeteners from natural origin and suitable for use in the present invention are Abrusoside A, Baiyunoside, Brazzein, Curculin, Cyclocarioside I, Dulcoside A, Dulcoside B, Glycyphyllin, Glycyrrhizic acid and its salts, Hernandulcin, Luo Han Guo sweetener, Mabinlin, Mogroside IV, Mogroside V, Monatin and its salts (Monatin SS RR RS SR), Miraculin, Monellin, Mukurozioside, Osladin, Periandrin I, Phlomisoside I, Phloridzin, Phyllodulcin, Polypodoside A, Pterocaryoside A, Pterocaryoside B, Rubusoside, Siamenoside, Thaumatin, Trilobatin, as well as Stevia, Stevioside, Rebaudioside A, Rebaudioside B, Rebaudioside C, Rebaudioside D, Rebaudioside E, and Rebaudioside F.

Examples of synthetic high-intensity sweeteners suitable for use in the present invention are Acesulfame, Acesulfame K, Alitame, Aspartame, Cyclamate, Neohespiridin DC, Neotame, Saccharine, and Sucralose. Especially preferred are sucralose and mixtures of acesulfame K and aspartame.

The nib sugar particle may in a preferred embodiment contain a combination of two or more high-intensity sweeteners; this has the advantage that the sweetness profile may be tailored towards specific needs, such as the desire to be as close to that of sucrose as possible or the desire to take specific flavour characteristic of a to be sweetened product into account. One preferred combination of high-intensity sweeteners is the combination of acesulfame K and aspartame; in this embodiment, the weight ratio between acesulfame K and aspartame may vary between wide limits but preferably lies between 4:1 and 1:4, more preferably between 3:1 and 1:1.

The nib sugar particle according to the invention has, like traditional nib sugar, an irregular appearance. Preferably, the largest dimension of at least 30 wt%, more preferably at least 40, 50 or 60% of a batch of nib sugar particles according to the invention lies between 1.5 mm and 15 mm; preferably the said largest dimension is at least 2, 2.5, 3, 3.5, 4, 4.5, 5, or 5.5 mm. The weight of the nib sugar particles according to the invention also varies within wide limits, preferably between 0.05 and 1.5 grams.

In a preferred embodiment of the invention, the weight of the particles within one batch of nib sugar particles according to the invention shows a rather limited variation, such that less than 15% of the particles deviates more than 30% from the average value of that batch. This has the advantage that the sweetness as conferred by each individual particle shows a variation that is small enough to be acceptable to consumers, e.g. when comparing a nib sugar particle to a standardised portion of sucrose such as a sachet or a lump.

In a preferred embodiment of the invention, the amount of high-intensity sweetener in the nib sugar particle is such that it provides between 3 times and 200 times the sweetness of the sweetness provided by the nutritive sweetener contained in the nib sugar particle. Preferably, the amount of high-intensity sweetener in the nib sugar particle is such that it provides at least 5, 10, 15, 20, 25, 30 or even 35 times the sweetness of the sweetness provided by the nutritive sweetener contained in the nib sugar particle. Also, the amount of high-intensity sweetener in the nib sugar particle is preferably such that it provides at most 180, 160, 140, 120, 100, 80, or 60 times the sweetness of the sweetness provided by the nutritive sweetener contained in the nib sugar particle. These ranges have the advantage that they allow a nib sugar particle of the invention to have a comparable amount of sweetness compared to a standard dosing of sucrose; such a standard dosing varies per country or even region but is often lying between 3 and 6 grams.

In embodiments such as the ones described above, it is clear that the high-intensity sweetener provides the largest part or even almost all of the sweetness, whereas the nutritive sweetener provides a mere minority or even only a negligible amount of sweetness. According to the invention, therefore, the first and principle role of the nutritive sweetener is that of a carrier, not that of a sweetener.

When the composition of a nib sugar particle according to the invention is, by applying the guidelines as given above, chosen such that its amount of sweetness approximates that of a lump of sucrose, one principal characteristic of the nib sugar particle of the invention is that it provides far fewer calories than does lump of sucrose that is equivalent in sweetness. Preferably, the composition of the nib sugar particle of the invention is chosen such that it has a caloric value lying between 0.4 and 1.5 kcal, preferably between 0.5 and 1.0 kcal, while providing the same amount of sweetness as a lump of sugar of 3 to 6 grams.

The nib sugar according to the invention may contain further compounds; non-limiting examples of such further compounds are compounds that bring flavour and/or colour to the nib sugar, hydrocolloids, starches such as rice starch, modified starches, polysaccharides, or TiO₂.

The constituents of the nib sugar particle according to the invention may be essentially homogeneously distributed over the particle. In a preferred embodiment, however, the nib sugar particle of the invention has a core and a first coating, whereby the first coating is present on the surface of the core, and wherein the core contains a nutritive sweetener and the first coating contains a high-intensity sweetener. Preferably, at least 50, 60 or even 70 wt.% or more of the total amount of high-intensity sweetener present in the nib sugar particle is contained in the first coating. This has the advantage that the high-intensity sweetener is the first compound to come into contact with other compounds when in use, which is advantageous a.o. in case the sweetener needs to dissolve as quickly as possible, such as when the nib sugar particle is used to sweeten beverages like coffee or tea. Nevertheless, it may still be that although the presence of the high-intensity sweetener is desirably most prominent on and near the surface, there is by this prominence introduced a small disadvantage, most notably when the nib sugar particles come into contact with skin - such as the hand - and in this process leave an undesired long-lingering sweetness on the skin. In order to reduce or even eliminate this disadvantage, it is preferred that the nib sugar particle has furthermore an outer coating, wherein the outer coating contains or even consists essentially of a nutritive sweetener. Preferably, the weight percentage of the high-intensity sweetener in the outer coating is at most 30%, 20%, or even 10% or 5% of the concentration of high-intensity sweetener in the first coating or, in case there is no first coating, the core. More preferably, the outer coating contains essentially no high-intensity sweetener.

The nib sugar particle according to the invention may be prepared by integrating the addition of a high-intensity sweetener into a production process of sugar nibs.

A suitable and known process for the preparation of nib sugar in case the nutritive sweetener is sucrose comprises the steps of:
i. Providing crystallised sucrose;
ii. Combining the crystallised sucrose with water, whereby the amount of water is such that the majority of the sucrose cannot dissolve, to form a moulding mass;
iii. Transporting and optionally pressing the moulding mass into moulds, to form pre-forms;
iv. Optionally drying the pre-forms;
v. Breaking the pre-forms, whereby nib sugar particles are formed.

Nib sugar particles according to the invention may be prepared by modifying an existing process for the production of nib sugar - such as the process comprising steps i) to v) - in various ways. One such way is to make sure by means known as such that the crystallised sucrose of step i) already contains an amount of high-intensity sweetener in it. Another way is to introduce the high-intensity sweetener into the moulding mass in step ii). Moreover, the crystallised sucrose of the known process may in step i) be replaced partly or wholly by other nutritive sweeteners.

In an alternative process, however, the nib sugar particle of the invention may be prepared in a process comprising the steps of:
a) providing nib sugar particles consisting essentially of a nutritive sweetener;
b) preparing a liquid coating composition having water as continuous phase and containing at least one high-intensity sweetener;
c) applying the coating composition to the nib sugar particles;
d) drying the nib sugar particles to a desired rest amount of water.

This process according to the invention has the advantage that it is not necessary to modify an existing process for nib sugar production. Moreover, this process has the advantage that the somewhat coarse surface structure that is typically found in nib sugar may be smoothened. Furthermore, this process according to the invention can allow the preferred embodiment of applying a thicker, or more than one coating to the particles; this may be achieved by repetition of steps c) or of steps c) and d). It was found that a repetition of steps c) and d) may a.o. be called for in case the desired thickness of the coating would, when all of the coating composition would be administered in one step, lead to unacceptable softness of the nib sugar particles resulting from dissolution of the nutritive sweetener. Another embodiment in which a series of repeating steps c) and d) may be called for is when it is desired that the coating is divided into two or more sub-coatings with different composition; the execution of this embodiment would thus normally require that not one but several coating compositions are created.

Steps a), b), c) and d) may be executed by methods known as such to the skilled person.

It is noted hereby that in step c), it is preferred to apply the coating composition by means of spraying. This spraying may be achieved preferably in a fluid bed apparatus or in an open or closed rotating drum apparatus. If a fluid bed apparatus is used, it is preferred that spraying from the top is done; it was found that less product out of specification (e.g. because the particles are too small) are made as compared to spraying the coating composition in from the bottom up.

It was found that in the execution of steps c) and d), it is beneficial to contemplate the effects of time and temperature. An increase in the temperature of execution has an accelerating influence on the speed of drying; nevertheless, care must also be taken that the temperature is not increased to such a level for so long that undesirable side effects such as degradation or caramelisation occur to significant amounts. It is preferred that the temperature at which steps c) and d) are executed lies between 60°C and 100°C, more preferably between 70 or 80°C and 95 or 90°C. The duration of the execution of steps c) and d) may vary within wide limits, preferably between 1 minute and 60 minutes.

In case steps c) and d) are executed in repetition, it is preferred that at the final repetition the drying step d) is done for a longer time than at preceding repetitions. It is preferred that the final execution of step d) is done such that the moisture content of the nib sugar particle of the invention is below 3 wt.%, more preferably below 2, 1.5, 1, 0.5, or even 0.40 wt. It was found that it is generally not advantageous to reduce the moisture content to lower than 0.01, 0.1 or 0.2 wt.%.

In a further preferred embodiment, it was found that it is advantageous to stabilise the coating composition; as meant herein, the term 'stabilisation' means any one or a combination of a dispersing action, a viscosity increase and a reduction in overall water content. Preferably, the stabilisation is achieved by adding a nutritive sweetener to the coating composition. More preferably, the nutritive sweetener is the same as the nutritive sweetener of which the nib sugar particles are consisted of. Most preferably the said nutritive sweetener is sucrose. If sucrose is used to stabilise the coating composition, it is preferred that the coating composition contains at least 10, 15 or even 20 or 25 wt.% of sucrose. The highest amount of nutritive sweetener in the coating composition is determined mostly by considerations of handling - e.g. avoiding that the viscosity becomes too high - and solubility - e.g. avoiding that the nutritive sweetener crystallises. It may be expected that it is beneficial if the amount of nutritive sweetener in the coating composition is at most 95 wt.%, more preferably at most 90, 85, 80, 75, 70, or 65 wt.%.

It was found that when using a stabilised coating composition that, as compared to a non-stabilised coating composition, the resulting nib sugar particles can have a smoother surface; moreover, it was found that any losses of product during the preparation process may be reduced, especially in case the coating composition is administered via a spraying technique. Furthermore, the use of a stabilised coating composition is in particular advantageous in case the high-intensity sweetener is, under the desired conditions of a.o., concentration and temperature, not fully soluble.

The nib sugar particles according to the invention may be used to sweeten a wide variety of foodstuffs. In one preferred embodiment, the nib sugar particles of the invention are used to sweeten beverages, in particular hot beverages like coffee or tea. In another preferred embodiment, the nib sugar particles of the invention are used to sweeten dairy products like yoghurt. In uses such as the sweetening of beverages, it may be advantageous to use a dispensing apparatus that is designed to administer one nib sugar particle at a time.

The invention will be illustrated by the following examples and using the accompanying figures, without being limited thereto.

### In the Figures:

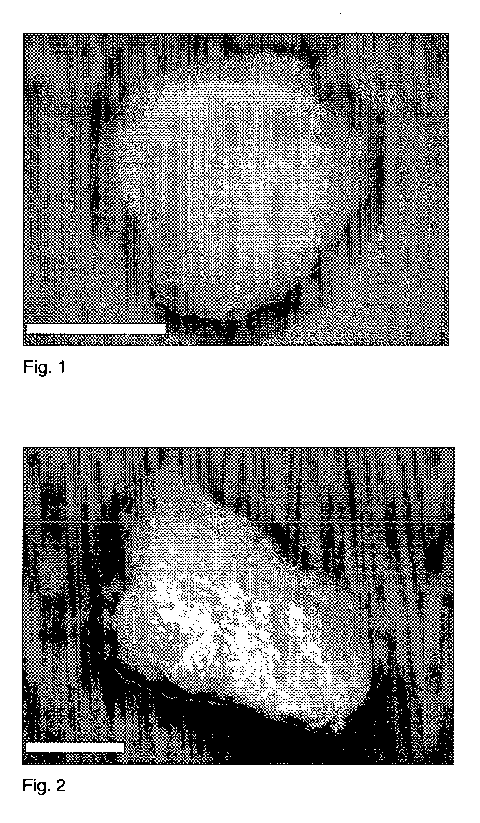

The photograph of Figure 1 shows a known nib sugar particle, consisting essentially of sucrose;

The photograph of Figure 2 shows a nib sugar particle according to the invention, comprising a core and a coating on the core containing high-intensity sweeteners; the liquid coating composition used to spray onto the nib sugar particles was not stabilised;

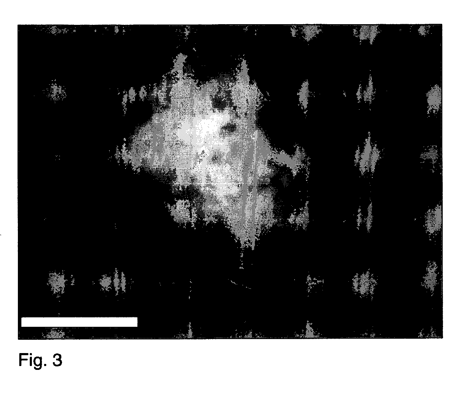

The photograph of Figure 3 shows a nib sugar particle according to the invention; this particle was prepared in similar fashion as the particle shown in Figure 2, however with the difference that the liquid coating composition was stabilised with sucrose.

### Example 1

### Nib sugar consisting of sucrose

An amount of 10 kg of commercially available nib sugar (supplier: Tiense Suikerraffinaderij, type P3) was provided. See Fig. 1 for a photograph of a representative particle.

A characteristic of nib sugar type P3 is that it consists essentially of sucrose. Furthermore, less than 20 wt.% has a length between 2.5 and 4 mm, at least 70 wt.% has a length between 4.0 mm and 5.6 mm, and less than 20 wt.% has a length of more than 5.6 mm.

### Preparation of coating composition

14.95 kg of a liquid coating composition was prepared by bringing together and mixing the following ingredients:
- water (7.8 kg)
- aspartame (0.65 kg)
- acesulfame k (1.3 kg)
- sucrose (5.2 kg)

Thus, the coating composition contained a mixture of the two high-intensity sweeteners acesulfame k and aspartame, whereby the weight ratio between acesulfame k and aspartame was 2:1. Furthermore, the coating composition was stabilised by sucrose, in a weight percentage of 35 wt.%.

### Applying the coating composition to the nib sugar particles & drying

The nib sugar particles consisting of sucrose were fed into a drum-coating unit (closed type). The drum coating unit had a spraying device, located at the centre axis of the unit. After the coating unit started rotating and was brought to a temperature of 60°C, 200 grams of the liquid coating composition was sprayed onto the nib sugar particles; this took about 30 seconds. Subsequently, dry air (relative humidity at most 30%) of 85°C was fed into the drum coating unit in order to dry the nib sugar particles. This drying step was executed for 3 minutes. After this, again 200 grams of the liquid coating composition was sprayed onto the nib sugar particles, followed by drying, whereby both spraying and drying were done under the same conditions. All in all, 7 kg of liquid coating composition was sprayed onto the nib sugar particles in 35 cycles. The drying step of the 35^{th} and last cycle was executed until the nib sugar particles, that had a very smooth surface, had a moisture content of about 0.35 wt.%.

### Analysis

After completion of the preparation process, an analysis (HPLC) was done in order to determine the overall composition of the nib sugar particles. The particles - a typical example of which is shown in Fig. 3 - had the following composition:
- Acesulfame K: 8.69 wt.%;
- Aspartame: 4.05 wt.%,
the balance being sucrose and 0.35 wt.% moisture. It may be concluded from the analysis that not all of the high-intensity sweeteners as sprayed onto the particles in the drum coating apparatus actually ended as coating; some product loss occurred, as is normal in this type of process.

## Claims

1. Nib sugar particle, containing a nutritive sweetener and a high-intensity sweetener.

2. Nib sugar particle, wherein the nutritive sweetener is chosen from the group consisting of sucrose, mixtures of 6-0-alpha-D-glucopyranosido-D-sorbitol (1,6-GPS) and 1-0-alpha-D-glucopyranosido-D-mannitoldihydrate (1,1-GPM-dihydrate) such as Isomalt^{®}, isomaltulose (Palatinose^{®}), trehalulose, sorbitol, xylitol, erythritol, maltitol, and any combination of these.

3. Nib sugar particle according to any one of claims 1 - 2, wherein the high-intensity sweetener is chosen from the group consisting of Acesulfame K, Aspartame, Neotame, Sucralose, Saccharine, Stevia and stevia-derived products such as Rebaudioside A, and any combination of these.

4. Nib sugar particle according to any one of claims 1 - 3, wherein the amount of high-intensity sweetener in the nib sugar particle is such that it provides between 3 times and 200 times the sweetness of the sweetness provided by the nutritive sweetener contained in the nib sugar particle.

5. Nib sugar particle according to any one of claims 1 - 4, whereby on average less than 2 wt.% of the nib sugar particles have a length smaller than 0.40 mm and whereby on average less than 7 wt.% of the nib sugar particles have a length larger than 16 mm.

6. Nib sugar particle according to claim 4, wherein the nib sugar particle has a caloric value lying between 0.5 and 1.5 kcal.

7. Nib sugar particle according to any one of claims 1 - 6, having a core and a first coating, whereby the first coating is present on the surface of the core, and wherein the core contains a nutritive sweetener and the first coating contains a high-intensity sweetener.

8. Nib sugar particle according to claim 7, having furthermore an outer coating, wherein the outer coating contains a nutritive sweetener.

9. Process for the preparation of nib sugar particles, comprising the steps of:
a) providing nib sugar particles consisting essentially of a nutritive sweetener;
b) preparing a liquid coating composition having water as continuous phase and containing at least one high-intensity sweetener;
c) applying the coating composition to the nib sugar particles;
d) drying the nib sugar particles to a desired rest amount of water.

10. Process according to claim 9, wherein in step b) or between step b) and step c) a stabilising compound is added to the coating composition.

11. Process according to claim 10, wherein the stabilising compound is a nutritive sweetener.

12. Process according to any one of claims 9 - 11, wherein step c) is executed by spraying the coating composition onto the nib sugar particles.

13. Use of the nib sugar particles according to any one of claims 1 - 6 in beverages or in yoghurt.
